# FASCICULE DE BREVET EUROPEEN

(11) **EP 0 965 784 B1**
(45) Date de publication et mention de la délivrance du brevet: **10.09.2003**
(21) Numéro de dépôt: 99810451.7
(22) Date de dépôt: 25.05.1999
(51) Int. Cl.: F16L 57/00

(54) **Gaine de protection pour câbles ou conduits**
Schutzhülle für Kabel oder Rohrleitungen
Protective cover for cables or conduits

(30) Priorité: 15.06.1998 FR 9807667
(43) Date de publication de la demande: 22.12.1999
(73) Titulaire: Plastomer AG, 5436 Würenlos (CH)
(72) Inventeur: Franci, Francois-Marie, 77340 Pontault-Combault (FR)
(74) Mandataire: Nithardt, Roland

(56) Documents cités:
- DE-A- 3 909 839
- DE-C- 19 601 913
- US-A- 5 353 843

## Description

La présente invention concerne une gaine de protection pour câbles ou conduits, notamment des câbles de transport d'énergie, des câbles de télécommunications ou des conduits de fluides, cette gaine de protection étant constituée de plusieurs éléments tubulaires indépendants emboîtés, respectivement agencés pour pivoter angulairement et se déplacer axialement les uns par rapport aux autres, chaque élément tubulaire comportant d'une part une gorge annulaire et d'autre part un bourrelet périphérique annulaire, la largeur de ladite gorge annulaire étant supérieure à la largeur dudit bourrelet périphérique annulaire, ledit bourrelet périphérique annulaire d'un élément tubulaire étant engagé de force dans la gorge annulaire d'un élément tubulaire adjacent et étant agencé pour se déplacer axialement et angulairement dans cette gorge annulaire.

On connaît déjà des gaines de protection telles que définies ci-dessus. Ces gaines ont une ouverture angulaire entre leurs extrémités et un rayon de courbure variables et réglables. Elles sont généralement utilisées pour raccorder des gaines de protection rectilignes, sensiblement rigides, de manière à former entre elles des coudes ayant une ouverture angulaire et un rayon de courbure variables et réglables.

Une gaine de protection couramment utilisée est constituée d'éléments tubulaires comportant chacun deux tronçons sensiblement cylindriques de diamètres différents. La gorge annulaire est ménagée à l'intérieur du tronçon cylindrique de grand diamètre et le bourrelet périphérique annulaire est disposé à l'extérieur et à l'extrémité du tronçon cylindrique de petit diamètre. Le bourrelet périphérique et la gorge intérieure sont cylindriques. Le diamètre intérieur de la gorge est inférieur au diamètre extérieur du bourrelet.

Cette gaine de protection présente divers inconvénients. Les éléments tubulaires sont réalisés en une matière présentant une résistance suffisante pour éviter leur écrasement et résister aux chocs. Quand les éléments sont inclinés angulairement les uns par rapport aux autres, le bourrelet cylindrique d'un élément se met en travers dans la gorge cylindrique d'un élément adjacent et déforme la paroi du fond de la gorge. D'une part, il est nécessaire d'exercer un effort substantiel pour donner à la gaine de protection une forme incurvée et pour la maintenir dans cette forme, d'autre part la liaison entre deux éléments adjacents n'est pas étanche. Pour remédier à ce défaut d'étanchéité, la gaine est généralement enfilée dans une enveloppe thermorétractable étanche, qui est rétractée par chauffage après mise en place de la gaine de protection dans la configuration choisie. Cette solution technique est coûteuse, compliquée et fastidieuse à mettre en oeuvre.

La demande de brevet allemand publiée sous le numéro DE-A-39 09839 a pour objet une gaine de protection contre la chaleur pour câbles ou conduits, en particulier pour une utilisation dans le compartiment moteur d'un véhicule automobile. Cette gaine est constituée de plusieurs pièces de liaison emboîtées les unes dans les autres. Chaque pièce de liaison comporte deux tronçons d'extrémité hémisphériques d'interconnexion, de dimensions différentes et de formes sensiblement complémentaires. Le rayon extérieur du petit tronçon d'extrémité hémisphérique est sensiblement égal au rayon intérieur du grand tronçon d'extrémité hémisphérique. Le petit tronçon d'extrémité d'une pièce de liaison est emboîté dans le grand tronçon d'extrémité complémentaire d'une pièce de liaison adjacente. Ils forment ensemble une rotule.

Cette gaine de protection présente des inconvénients majeurs. Les pièces de liaison adjacentes ne peuvent pas se déplacer axialement les unes par rapport aux autres à cause de la forme hémisphérique des tronçons d'extrémité, seul un pivotement angulaire étant possible entre les pièces de liaison adjacentes. Le rayon de courbure et l'ouverture angulaire de la gaine de protection ne sont donc pas réglables indépendamment, et il n'est pas possible de placer la gaine de protection dans une configuration choisie quelconque. La gaine de protection n'assure pas une bonne étanchéité car la surface extérieure d'un petit tronçon d'extrémité hémisphérique d'une pièce de liaison est seulement très légèrement en contact avec la surface intérieure d'un grand tronçon d'extrémité hémisphérique d'une pièce de liaison adjacente. De plus, cette gaine de protection, qui est prévue pour résister à la chaleur, est mal adaptée pour résister aux chocs et à l'écrasement.

Le but de la présente invention est de pallier ces inconvénients en fournissant une gaine de protection résistant aux chocs et à l'écrasement, qui est généralement très souple, qui présente une ouverture angulaire et un rayon de courbure variables et réglables, et dont les liaisons entre les éléments tubulaires adjacents assurent une bonne étanchéité.

Ce but est atteint par une gaine de protection telle que décrite en préambule et caractérisée en ce que ladite gorge annulaire comporte une première surface d'appui qui constitue le fond de cette gorge annulaire et dont la section par un plan axial définit un premier arc de cercle, en ce que le bourrelet périphérique annulaire comporte une deuxième surface d'appui disposée à sa périphérie, et en ce que la première surface d'appui d'un élément tubulaire est en contact avec la deuxième surface d'appui d'un élément tubulaire adjacent et définit une liaison étanche quelles que soient les positions relatives desdits éléments tubulaires adjacents.

Selon une forme de réalisation préférée, ladite deuxième surface d'appui a une section par un plan axial qui définit un deuxième arc de cercle.

Ledit deuxième arc de cercle de ladite deuxième surface d'appui et ledit premier arc de cercle de ladite première surface d'appui peuvent avoir des rayons de courbure sensiblement égaux.

Lesdits premier et deuxième arcs de cercle sont, de préférence, centrés sur l'axe de l'élément tubulaire.

Selon une variante de réalisation, chaque élément tubulaire comporte au moins une rainure annulaire ménagée dans ledit bourrelet périphérique annulaire. Chaque élément tubulaire peut comporter un organe d'étanchéité logé dans ladite rainure annulaire.

Selon un mode de réalisation particulièrement avantageux, chaque élément tubulaire comporte un premier tronçon et un deuxième tronçon sensiblement cylindriques et coaxiaux, le diamètre extérieur du deuxième tronçon étant inférieur au diamètre intérieur du premier tronçon, ladite gorge annulaire étant ménagée à l'intérieur du premier tronçon et ledit bourrelet périphérique annulaire étant disposé à l'extérieur du deuxième tronçon.

Selon un mode de réalisation préféré, la largeur de ladite gorge annulaire et la largeur dudit bourrelet périphérique annulaire sont définies de sorte que l'angle de pivotement angulaire entre deux éléments tubulaires adjacents soit compris entre 1 et 15 degrés et de préférence approximativement égal à 3 degrés.

La présente invention et ses avantages apparaîtront mieux dans la description suivante d'exemples de réalisation préférés de l'invention, en référence aux dessins annexés, dans lesquels:
- la figure 1 est une vue en coupe axiale représentant une partie de la gaine de protection selon un mode de réalisation de l'invention; et
- la figure 2 est une vue en coupe axiale représentant une variante de réalisation de la gaine de protection de la figure 1.

La gaine de protection 10 de l'invention est constituée de plusieurs éléments tubulaires indépendants, emboîtés les uns dans les autres et destinés à pivoter angulairement et se déplacer axialement les uns par rapport aux autres, dans certaines limites, pour permettre à la gaine d'adopter un rayon de courbure et une ouverture angulaire entre ses extrémités variables et réglables, de façon sensiblement indépendante.

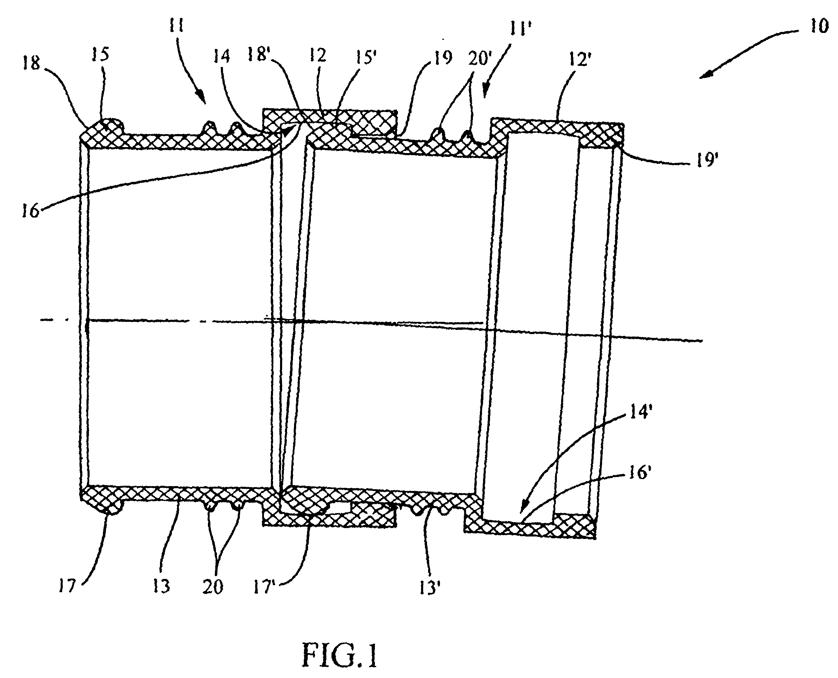

La figure 1 illustre deux éléments tubulaires 11, 11' adjacents, de la gaine de protection 10. Chaque élément tubulaire 11 comporte un premier tronçon 12 et un deuxième tronçon 13 sensiblement cylindriques et coaxiaux. Le diamètre extérieur du deuxième tronçon 13 est inférieur au diamètre intérieur du premier tronçon 12. Ce premier tronçon est pourvu d'une gorge annulaire 14 ménagée dans sa paroi intérieure. Le deuxième tronçon 13 comporte un bourrelet périphérique annulaire 15 disposé à l'extérieur et sensiblement à l'extrémité du deuxième tronçon. La largeur de la gorge annulaire 14 est sensiblement supérieure à la largeur du bourrelet périphérique annulaire 15.

Le fond de la gorge annulaire 14 forme une première surface d'appui 16 dont la section par un plan axial définit un premier arc de cercle. Le bourrelet périphérique annulaire 15 comporte une deuxième surface d'appui 17 disposée à sa périphérie, dont la section par un plan axial définit un deuxième arc de cercle.

Le bourrelet périphérique annulaire 15' de l'élément tubulaire 11' est engagé de force dans la gorge annulaire 14 de l'élément tubulaire adjacent 11 pour permettre un accrochage des éléments tubulaires entre eux. Pour faciliter l'emboîtement, le bourrelet périphérique annulaire 15' comporte une face externe 18' biseautée ou arrondie, dirigée vers l'extérieur de l'élément tubulaire 11'. Le premier tronçon 12 comporte à son extrémité libre une face interne 19 biseautée ou arrondie, dirigée vers l'extérieur de l'élément tubulaire 11. La gaine de protection 10 est formée en une matière synthétique thermoformable par exemple. L'emboîtement de force des éléments tubulaires 11, 11' est réalisé à chaud par exemple.

Chaque élément tubulaire 11 comporte deux nervures de renfort 20 circulaires, disposées à la périphérie du deuxième tronçon 13 entre le bourrelet périphérique annulaire 15 et le premier tronçon 12 par exemple. Ces nervures de renfort 20 permettent d'augmenter la rigidité des éléments tubulaires tout en limitant l'épaisseur de leurs parois.

Le diamètre extérieur du deuxième tronçon 13' de l'élément 11' étant inférieur au diamètre intérieur du premier tronçon 12 de l'élément 11 adjacent, le deuxième tronçon 13' peut pivoter angulairement et se déplacer axialement par rapport au premier tronçon 12. La largeur de la gorge annulaire 14 de l'élément 11 étant supérieure à la largeur du bourrelet périphérique annulaire 15' de l'élément adjacent 11', ce bourrelet 15' peut également se déplacer axialement et pivoter angulairement dans la gorge annulaire 14.

Les éléments tubulaires adjacents 11, 11' sont agencés de sorte que la première surface d'appui 16, définie par le fond de la gorge annulaire 14, de l'élément tubulaire 11 est en contact avec la deuxième surface d'appui 17', formée sur le bourrelet périphérique annulaire 15', de l'élément tubulaire 11' adjacent, et ceci quelles que soient leurs positions relatives.

Le premier et le deuxième arc de cercle des surfaces d'appui 16 et 17' des deux éléments tubulaires adjacents 11 et 11', respectivement, favorisent le pivotement angulaire et le déplacement axial relatifs des éléments tubulaires. La gaine de protection 10 de l'invention est par conséquent généralement très souple. En outre, les liaisons entre les éléments tubulaires adjacents sont étanches, quelle que soit la position relative de ces éléments tubulaires.

Le premier arc de cercle de la première surface d'appui 16 de la gorge annulaire 14 a un rayon de courbure sensiblement égal à celui du deuxième arc de cercle de la deuxième surface d'appui 17 du bourrelet périphérique annulaire 15 par exemple. Le premier et le deuxième arc de cercle peuvent être centrés sur l'axe de l'élément tubulaire 11. De ce fait, on obtient approximativement une liaison rotule entre deux éléments tubulaires adjacents 11 et 11'. La gaine de protection 10 est alors extrêmement souple, car deux éléments adjacents peuvent très facilement pivoter angulairement l'un par rapport à l'autre. Il est à noter que deux éléments adjacents peuvent toujours se déplacer axialement l'un par rapport à l'autre en exerçant un léger effort.

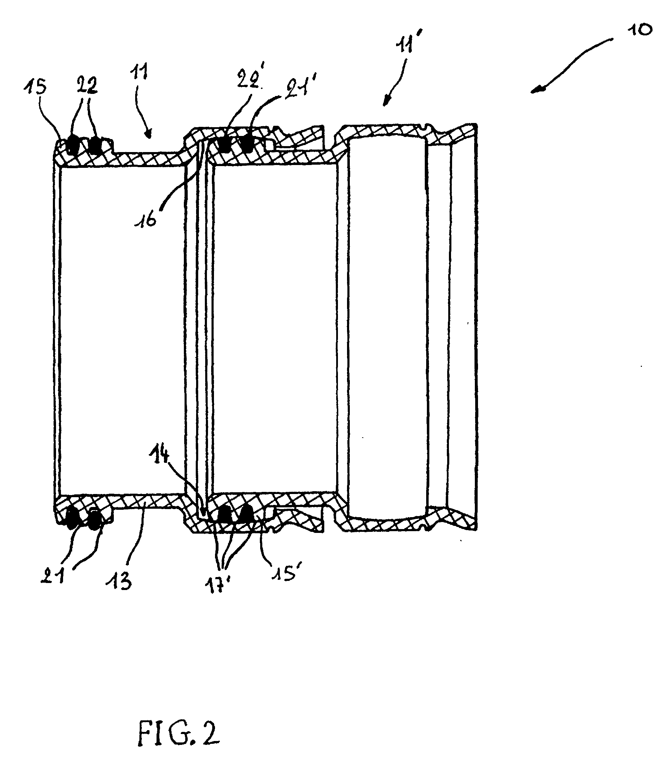

La figure 2 illustre une variante de réalisation de la gaine de protection 10 de l'invention. Les nervures de renfort ont été supprimées sur les éléments tubulaires. Chaque élément tubulaire 11 comporte deux rainures annulaires 21, par exemple, ménagées dans le bourrelet périphérique annulaire 15 du deuxième tronçon 13. La profondeur des deux rainures 21 est sensiblement égale à l'épaisseur du bourrelet 15 et les rainures partagent axialement le bourrelet 15 en trois parties de largeur approximativement égale par exemple. L'élément tubulaire 11 comporte deux organes d'étanchéité 22, tels que des joints toriques, logés dans les rainures annulaires 21. Les joints d'étanchéité 22, 22' dépassent, avant l'emboîtement des éléments tubulaires 11, 11' entre eux, à l'extérieur des rainures annulaires 21, 21', respectivement. Quand la gaine de protection 10 est assemblée, les joints d'étanchéité 22' d'un élément tubulaire 11' sont comprimés dans leur rainure 21' respective par la première surface d'appui 16 de la gorge annulaire 14 de l'élément tubulaire 11 adjacent, augmentant de ce fait le degré d'étanchéité entre deux éléments tubulaires adjacents 11, 11'. Il est à noter que l'addition d'organes d'étanchéité 22, 22' dans les rainures 21, 21' permet de limiter la pression de contact entre la première surface d'appui 16, définie par le fond de la gorge 14, d'un élément tubulaire 11 et la deuxième surface d'appui 17', formée sur le bourrelet 15', de l'élément tubulaire 11' adjacent. La pression de contact est liée aux dimensions radiales de la gorge et du bourrelet. Cela permet d'obtenir une gaine de protection 10 plus souple et une meilleure étanchéité, même dans des conditions d'utilisation extrême, par exemple si la gaine est immergée dans un liquide sous forte pression.

Pour les modes de réalisation de la gaine de protection 10 de l'invention décrits et illustrés précédemment, le pivotement angulaire maximal entre deux éléments tubulaires adjacents est limité par leurs formes et leurs dimensions, en particulier par la largeur de la gorge annulaire et du bourrelet périphérique annulaire. L'angle de pivotement maximal est compris entre 1 et 15 degrés, par exemple, et est de préférence égal à 3 degrés. Dans ce dernier cas, il est nécessaire d'emboîter trente éléments tubulaires pour que la gaine de protection 10 puisse former un coude de 90 degrés par exemple.

La gaine de protection 10 peut être utilisée notamment pour raccorder deux gaines de protection rectilignes et rigides. Les deux éléments tubulaires d'extrémité de la gaine de protection 10 sont alors agencés pour se raccorder à ces deux gaines de protection rigides rectilignes.

Les éléments tubulaires doivent présenter une certaine rigidité pour garantir une bonne protection à l'écrasement et contre les chocs. L'épaisseur des parois des éléments tubulaires est déterminée par la matière utilisée, par les charges subies lors de leur utilisation et par le coefficient de sécurité désiré. Ces critères peuvent être déterminants quand la gaine est enterrée ou quand elle protège des câbles et/ou des conduits relativement fragiles par exemple. Les éléments tubulaires peuvent être formés en une matière synthétique ou en une autre matière appropriée. De manière évidente, la matière peut aussi être choisie pour que la gaine ait des propriétés particulières, telles qu'une résistance à la chaleur, à un rayonnement ou à un milieu corrosif par exemple.

La gaine de protection de l'invention est simple à fabriquer. Elle est très résistante aux chocs et à l'écrasement. Elle est généralement souple ou flexible, ce qui est un avantage indéniable lorsqu'elle doit être implantée dans des endroits difficiles d'accès, tels que des saignées, des fouilles ou similaires. La gaine de protection est modulable. Elle peut se présenter sous différentes formes, à savoir sous différents diamètres, sous différentes longueurs, en modifiant le nombre d'éléments tubulaires. Elle s'adapte donc très bien à toutes les configurations de pose. L'ouverture angulaire entre ses deux extrémités peut varier de 0 à 90 degrés, voire davantage si nécessaire, avec un rayon de courbure choisi pour une ouverture angulaire déterminée. Enfin, elle est parfaitement étanche. En conséquence, elle ne nécessite aucun moyen ou opération supplémentaires, telle que la pose d'une enveloppe thermorétractable étanche obligatoire avec les gaines de protection de l'art antérieur. De ce fait, elle est finalement peu coûteuse.

## Revendications

1. Gaine de protection pour câbles ou conduits, notamment des câbles de transport d'énergie, des câbles de télécommunications ou des conduits de fluides, cette gaine de protection étant constituée de plusieurs éléments tubulaires indépendants emboîtés, respectivement agencés pour pivoter angulairement et se déplacer axialement les uns par rapport aux autres, chaque élément tubulaire comportant d'une part une gorge annulaire et d'autre part un bourrelet périphérique annulaire, la largeur de ladite gorge annulaire étant supérieure à la largeur dudit bourrelet périphérique annulaire, ledit bourrelet périphérique annulaire d'un élément tubulaire étant engagé de force dans la gorge annulaire d'un élément tubulaire adjacent et étant agencé pour se déplacer axialement et angulairement dans cette gorge annulaire, **caractérisée en ce que** ladite gorge annulaire (14, 14') comporte une première surface d'appui (16, 16') qui constitue le fond de cette gorge annulaire et dont la section par un plan axial définit un premier arc de cercle, **en ce que** le bourrelet périphérique annulaire (15, 15') comporte une deuxième surface d'appui (17, 17') disposée à sa périphérie, et **en ce que** la première surface d'appui (16) d'un élément tubulaire (11) est en contact avec la deuxième surface d'appui (17') d'un élément tubulaire adjacent (11') et définit une liaison étanche quelles que soient les positions relatives desdits éléments tubulaires adjacents (11, 11').

2. Gaine de protection selon la revendication 1, **caractérisée en ce que** ladite deuxième surface d'appui (17, 17') a une section par un plan axial qui définit un deuxième arc de cercle.

3. Gaine de protection selon la revendication 2, **caractérisée en ce que** ledit deuxième arc de cercle de ladite deuxième surface d'appui (17, 17') et ledit premier arc de cercle de ladite première surface d'appui (16, 16') ont des rayons de courbure sensiblement égaux.

4. Gaine de protection selon la revendication 3, **caractérisée en ce que** ledit premier arc de cercle et ledit deuxième arc de cercle sont centrés sur l'axe de l'élément tubulaire (11, 11').

5. Gaine de protection selon la revendication 1, **caractérisée en ce que** chaque élément tubulaire (11, 11') comporte au moins une rainure annulaire (21, 21') ménagée dans ledit bourrelet périphérique annulaire (15, 15').

6. Gaine de protection selon la revendication 5, **caractérisée en ce que** chaque élément tubulaire (11, 11') comporte un organe d'étanchéité (22, 22') logé dans ladite rainure annulaire (21, 21').

7. Gaine de protection selon la revendication 1, **caractérisée en ce que** chaque élément tubulaire (11, 11') comporte un premier tronçon (12, 12') et un deuxième tronçon (13, 13') sensiblement cylindriques et coaxiaux, le diamètre extérieur du deuxième tronçon (13, 13') étant inférieur au diamètre intérieur du premier tronçon (12, 12'), et **en ce que** ladite gorge annulaire (14, 14') est ménagée à l'intérieur du premier tronçon (12, 12') et ledit bourrelet périphérique annulaire (15, 15') est disposé à l'extérieur du deuxième tronçon (13, 13').

8. Gaine de protection selon la revendication 1, **caractérisée en ce que** la largeur de ladite gorge annulaire (14, 14') et la largeur dudit bourrelet périphérique annulaire (15, 15') sont définies de sorte que l'angle de pivotement angulaire entre deux éléments tubulaires adjacents (11, 11') soit compris entre 1 et 15 degrés et de préférence approximativement égal à 3 degrés.

## Patentansprüche

1. Schutzummantelung für Kabel oder Leitungen, insbesondere Energieübertragungskabel, Fernmeldeverkehrskabel oder Leitungen für Flüssigkeiten, wobei die Schutzummantelung aus mehreren, voneinander unabhängigen, ineinandergesteckten rohrförmigen Elementen besteht, die jeweils winklig drehbar und im Verhältnis zueinander axial verschiebbar sind, wobei jedes rohrförmige Element einerseits eine Ringnut und andererseits einen ringförmigen Umfangswulst aufweist, wobei die Breite der Ringnut größer ist als die Breite des ringförmigen Umfangswulstes, und wobei der ringförmige Umfangswulst eines rohrförmigen Elementes unter Krafteinwirkung in der Ringnut eines angrenzenden rohrförmigen Elementes in Eingriff gebracht wird und in der ringförmigen Nut so in Eingriff steht, dass er in der Ringnut axial und winkelförmig verschiebbar ist,
**dadurch gekennzeichnet, dass**
die Ringnut (14,14') eine erste Auflagefläche (16,16') aufweist, die den Boden der Ringnut darstellt und deren Querschnitt auf einer Axialebene einen ersten Kreisbogen definiert, wobei der ringförmige Umfangswulst (15,15') eine an seinem Umfang angeordnete zweite Auflagefläche (17,17') aufweist und die erste Auflagefläche (16) eines rohrförmigen Elementes (11) mit der zweiten Auflagefläche (17') eines angrenzenden rohrförmigen Elementes (11') in Berührung steht und unabhängig von den verhältnismäßigen Positionen der angrenzenden rohrförmigen Elemente (11,11') eine dichte Verbindung definiert.

2. Schutzummantelung nach Anspruch 1,
**dadurch gekennzeichnet, dass**
die zweite Auflagefläche (17,17') einen Querschnitt auf einer Axialebene aufweist, der einen zweiten Kreisbogen definiert.

3. Schutzummantelung nach Anspruch 2,
**dadurch gekennzeichnet, dass**
der zweite Kreisbogen der zweiten Auflagefäche (17,17') und der erste Kreisbogen der ersten Auflagefläche (16,16') praktisch gleiche Biegeradien aufweisen.

4. Schutzummantelung nach Anspruch 3,
**dadurch gekennzeichnet, dass**
der erste Kreisbogen und der zweite Kreisbogen auf der Achse des rohrförmigen Elementes (11,11') zentriert sind.

5. Schutzummantelung nach Anspruch 1,
**dadurch gekennzeichnet, dass**
jedes rohrförmige Element (11,11') mindestens einen in dem ringförmigen Umfangswulst (15,15') ausgesparten Ringschlitz (21,21') aufweist.

6. Schutzummantelung nach Anspruch 5,
**dadurch gekennzeichnet, dass**
jedes rohrförmige Element(11,11') ein in dem Ringschlitz (21,21') untergebrachtes Dichtungselement (22,22') aufweist.

7. Schutzummantelung nach Anspruch 1,
**dadurch gekennzeichnet, dass**
jedes rohrförmige Element (11,11') ein erstes Teilstück (12,12') und ein zweites Teilstück (13, 13') aufweist, die praktisch zylindrisch ausgebildet und koaxial zueinander angeordnet sind, wobei der Außendurchmesser des zweiten Teilstückes (13, 13') kleiner als der Innendurchmesser des ersten Teilstückes (12,12') ist, und wobei die Ringnut (14,14') im Inneren des ersten Teilstückes (12, 12') ausgespart und der ringförmige Umfangswulst (15,15') außerhalb des zweiten Teilstückes (13, 13') angeordnet ist.

8. Schutzummantelung nach Anspruch 1,
**dadurch gekennzeichnet, dass**
die Breite der Ringnut (14,14') und die Breite des ringförmigen Umfangswulstes (15,15') so definiert sind, dass der Winkel der winkligen Drehbewegung zwischen zwei aneinander angrenzenden rohrförmigen Elementen (11,11') zwischen einschließlich 1 und 15 Grad, und vorzugsweise annähernd 3 Grad liegt.

## Claims

1. A protective sheath for cables or conduits, especially for energy transport cables, telecommunications cables or liquid pipes, this protective sheath being formed by several nested independent tubular elements, respectively designed to pivot angularly and to move axially in relation to each other, each tubular element comprising firstly an annular groove and secondly an annular peripheral flange, the width of the said annular groove being greater than the width of the said annular peripheral flange, the said annular peripheral flange of a tubular element being engaged forcibly in the annular groove of an adjacent tubular element and being designed to move axially and angularly in this annular groove,
**characterised in that** the said annular groove (14, 14') comprises a first support surface (16, 16') which forms the base of this annular groove and the section of which through an axial plane defines a first arc of a circle,
**in that** the annular peripheral flange (15, 15') comprises a second support surface (17, 17') disposed on its periphery,
**and in that** the first support surface (16) of a tubular element (11) is in contact with the second support surface (17') of an adjacent tubular element (11') and defines a tight connection regardless of the relative positions of the said adjacent tubular elements (11, 11').

2. A protective sheath according to Claim 1,
**characterised in that** the said second support surface (17, 17') has a section through an axial plane which defines a second arc of a circle.

3. A protective sheath according to Claim 2,
**characterised in that** the said second arc of a circle of the said second support surface (17, 17') and the said first arc of a circle of the said first support surface (16, 16') have substantially equal radii of curvature.

4. A protective sheath according to Claim 3,
**characterised in that** the said first arc of a circle and the said second arc of a circle are centred on the axis of the tubular element (11, 11').

5. A protective sheath according to Claim 1,
**characterised in that** each tubular element (11, 11') comprises at least one annular groove (21, 21') recessed in the said annular peripheral flange (15, 15').

6. A protective sheath according to Claim 5,
**characterised in that** each tubular element (11, 11') comprises a sealing member (22, 22') housed in the said annular groove (21, 21').

7. A protective sheath according to Claim 1,
**characterised in that** each tubular element (11, 11') comprises a first section (12, 12') and a second section (13, 13') which are substantially cylindrical and coaxial, the external diameter of the second section (13, 13') being less than the internal diameter of the first section (12, 12'),
**and in that** the said annular groove (14, 14') is recessed in the interior of the first section (12, 12') and the said annular peripheral flange (15, 15') is disposed on the exterior of the second section (13, 13').

8. A protective sheath according to Claim 1,
**characterised in that** the width of the said annular groove (14, 14') and the width of the said annular peripheral flange (15, 15') are defined so that the angular pivoting angle between two adjacent tubular elements (11, 11') is between 1 and 15 degrees and preferably approximately equal to 3 degrees.
